# EUROPEAN PATENT APPLICATION

(11) **EP 3 922 920 A1**
(43) Date of publication of application: **15.12.2021**
(21) Application number: 20810155.0
(22) Date of filing: 19.03.2020
(51) Int. Cl.: F24H 4/02, F24H 9/00

(54) **WATER HEATER, CONTROL METHOD FOR WATER HEATER AND STORAGE MEDIUM**

(30) Priority: 22.05.2019 CN 201910427325
(71) Applicant: HEFEI MIDEA HEATING & VENTILATING EQUIPMENT CO., LTD., Boyan Science Park, High-Tech Zone, Hefei Anhui 230088 (CN); Midea Group Co., Ltd., Foshan, Guangdong 528311 (CN)
(72) Inventor: WANG, Chenchen, Hefei, Anhui 230088 (CN); LIU, Chun, Hefei, Anhui 230088 (CN); XI, Yang, Hefei, Anhui 230088 (CN); WEI, Pengyun, Hefei, Anhui 230088 (CN)
(74) Representative: Whitlock, Holly Elizabeth Ann
(86) International application number: PCT/CN2020/080233
(87) International publication number: WO 2020/233215

(57) **Abstract**

Provided by the present application are a water heater, a control method for the water heater, and a storage medium. The water heater comprises: an external unit, in which a refrigerant is provided; and heat storage devices which are connected to the external unit, wherein the external unit can compress the refrigerant such that the refrigerant flow to the heat storage device to store heat in the heat storage devices, and each heat storage device is provided with a water inlet pipe and a water outlet pipe. There are at least two heat storage devices, and at least two heat storage devices are connected in parallel. In the water heater provided by the present application, cold water entering from the water inlet pipe directly flows out of the water outlet pipe via the heat storage devices, thereby achieving the function of heating flowing water, and meeting the user's demand for rapid water supply and ensuring water healthy. In addition, there are at least two heat storage devices, and at least two heat storage devices are connected in parallel, so that after the heat in one heat storage device is used up, water can be heated immediately, and heat in other heat storage devices can be transferred to meet users' massive water demand.

## Description

### CROSS-REFERENCE TO RELATED APPLICATION

This application claims priority to and the benefit of the Chinese Patent Application No. "201910427325.0" filed on May 22, 2019, the entire content of which is incorporated herein by reference.

### FIELD

The present disclosure relates to the field of household appliances, in particular relates to a water heater, a control method for a water heater and a storage medium.

### BACKGROUND

At present, the household electric water heater is basically installed independently, that is, a separate electric water heater is installed for each water consuming position. When there are two or more water consuming positions installed in home which have difference demands on hot water, if one water consuming position is in higher demand, the water heater installed at this water consuming position needs to restart heating after the hot water is depleted, so that the user needs to wait for a time period, which will adversely affect the user's experience.

### SUMMARY

The present disclosure aims to solve at least one technical problem existing in the prior art or the related art.

For this, in a first aspect, the present disclosure provides in embodiments a water heater.

In a second aspect, the present disclosure provides in embodiments a control method for a water heater.

In a third aspect, the present disclosure provides in embodiments a computer readable storage medium.

In view of the above, in the first aspect, the present disclosure provides in embodiments a water heater, including: an external unit, in which a refrigerant is provided; and a heat storage device connected to the external unit, the external unit being capable of compressing the refrigerant and causing the refrigerant to flow to the heat storage device for storing heat in the heat storage device, each heat storage device being provided with a water inlet pipe and a water outlet pipe, wherein the number of the heat storage devices is at least two which are connected in parall el.

The present disclosure provides in embodiments a water heater, including the external unit and the heat storage device. The external unit is configured to provide heat to the heat storage device, to store the heat in the heat storage device. Each heat storage device includes the water inlet pipe and the water outlet pipe. The water flow enters from the water inlet pipe, passes through the heat storage device for heat exchange with the heat storage device, and outflows from the water outlet pipe as hot water. In the whole process, the heat storage device does not need to store water, which can significantly reduce the volume of the heat storage device. When hot water is needed, the cold water entering from the water inlet pipe directly passes through the heat storage device and then outflows from the water outlet pipe, thus achieving a function of heating running water, meeting the user's demand on rapid consumption of hot water, and ensuring healthy water consumption. In addition, the number of the heat storage devices is at least two, which greatly improve the water supply for the user. Each heat storage device is provided with the water inlet pipe and the water outlet pipe. The at least two heat storage device may be installed separately in different spaces for users to use in different spaces. The at least two heat storage device are connected in parallel, so that one heat storage device, after depletion of heat, will be immediately heated and provided with heat transferring from other heat storage devices, thus meeting the user's demand on large consumption of hot water. Besides, the external unit and the heat storage may be installed separately, thereby avoiding noise from occurring at the internal side for heat storage and water consumption, thus improving comfortableness and achieving installation in either exposing or hidden way, thus saving spaces for users.

The water heater provided in the above embodiment of the present disclosure may further include the following additional technical features.

In any embodiment described above, preferably, respective water inlet pipes corresponding to any two heat storage devices among said at least two heat storage devices are connected; and respective water outlet pipes corresponding to any two heat storage devices among said at least two heat storage devices are connected.

In this embodiment, respective water inlet pipes corresponding to any two heat storage devices among said at least two storage devices are connected; respective water outlet pipes corresponding to any two heat storage devices among said at least two storage devices are connected; and any one of the water inlet pipes is connected to a tap water pipe. During water consumption, when the water temperature in the heat storage device, the water outlet pipe of which is discharging water, is low, hot water in other heat storage devices can be transferred, and at the same time the heat storage device at the low temperature is heated, thereby meeting the user's demand on large consumption of hot water.

In any embodiment described above, preferably, the heat storage device includes: a valve, provided at the water outlet pipe and/or the water inlet pipe, wherein a position where respective water outlet pipes corresponding to any two heat storage devices among said at least two heat storage devices are connected is located in front of the valve at the water outlet pipe along a direction of water outflow; and/or a position where respective water inlet pipes corresponding to any two heat storage devices among said at least two heat storage devices are connected is located after the valve at the water inlet pipe long a direction of water inflow.

In this embodiment, the water outlet pipe or/and the water inlet pipe is(are) provided with a valve or valves, which is(are) configured to control the water outlet pipe or/and the water inlet pipe to switch-on or switch-off. Further, the valve is normally in a switching-on state. The position where the respective water outlet pipes corresponding to any two heat storage devices among said at least two storage devices are connected is located in front of the valve along the direction of water outflow. In other words, the water flow first passes through the valve and then passes through the position where the respective water outlet pipes are connected, thus allowing the valve to control the water outlet pipe of the heat storage device corresponding to this valve. Further, the water inlet pipe is also provided with a valve. The position where the respective water inlet pipes are connected is located after the valve at the water inlet pipe. In other words, the water flow first passes through the position where the respective water inlet pipes are connected and then passes through the valve at the water inlet pipe.

In any embodiment described above, preferably, the heat storage device further includes: an outer shell, within which is filled with a phase-change material; and a heat exchanger, arranged inside the outer shell and provided inside with a heat-storage flow path and a heat-exchange water path in an intersected manner, wherein the phase-change material is filled between the heat-storage flow path and the heat-exchange water path, the heat-exchange water path connects the water inlet pipe and the water outlet pipe, the heat-storage flow path is connected to the external unit via a refrigerant pipe, the refrigerant is capable of flowing from the external unit to the heat-storage flow path via the refrigerant pipe.

In this embodiment, the heat storage device further includes the outer shell and the heat exchanger arranged inside the outer shell. The heat exchanger is provided inside with the heat-storage flow path and the heat-exchange water path in the intersected manner. The phase-change material is filled between the heat-storage flow path and heat-exchange water path, to achieve heat exchange between fluid and water. The heat-storage flow path is connected to the external unit. The fluid passes through the heat-storage flow path for heat exchange with the phase-change material, so as to store heat in the phase-change material. The heat-exchange water path connects the water inlet pipe and the water outlet pipe, so that water flow enters the heat-exchange water path from the water inlet pipe, becomes hot water after heat exchange with the phase-change material and outflows from the water outlet pipe, thereby meeting the user's demand on hot water consumption.

In any embodiment described above, preferably, wherein the heat storage device further includes: a temperature detecting configuration, arranged inside the outer shell and configured to detect a temperature of the phase-change material.

In this embodiment, the heat storage device further includes the temperature detecting configuration. The temperature detecting configuration is arranged inside the outer shell and configured to detect the temperature of the phase-change material, so as to judge the remaining heat inside the heat storage device, and further judge whether action of heat storage is completed or whether the phase-change material needs to be heated according to the temperature in the phase-change material.

In any embodiment described above, preferably, the valve is a one-way solenoid valve.

In this embodiment, the valve is the one-way solenoid valve, thereby controlling the water outlet pipe to switch-on or switch-off in one way.

In any embodiment described above, preferably, the phase-change material has a phase-change temperature greater than or equal to 45 °C and lower than or equal to 80 °C.

In this embodiment, the phase-change material has the phase-change temperature greater than or equal to 45 °C and lower than or equal to 80 °C. Compared with the water storage- and heat pump-based water heater, the water heater provided in embodiments of the present disclosure is of a reduce volume by more than 45% under the premise of supplying the same volume of hot water.

In any embodiment described above, preferably, the water flow detecting configuration is a Hall sensor.

In this embodiment, the water flow detecting configuration is the Hall sensor, configured to feed back a water flow signal for judging whether the user is consuming water.

In any embodiment described above, preferably, the external unit further includes: a shell body, connected with the refrigerant pipe which includes a first pipe and a second pipe, the first pipe and the second pipe each connecting the shell body and the heat-storage flow path; a compressor, arranged inside the shell body and connected to the first pipe; and an evaporator, arranged inside the shell body and connected to both the compressor and the second pipe, wherein the compressor is capable of compressing the refrigerant and causing the refrigerant to flow from the compressor to the heat storage device via the refrigerant pipe, for storing heat in the heat storage device.

In this embodiment, the external unit includes the shell body; and the compressor and the evaporator both arranged inside the shell body. In specific, the compressor compresses the refrigerant, and thus the refrigerant is compressed in the compressor into a high-temperature and high-pressure stage before entering the heat storage device, in which heat exchange occurs between the refrigerant and the phase-change material, so as to store heat in the heat storage device. After the heat exchange, the refrigerant flows from the heat storage device to the evaporator via the second pipe, and then flows back to the compressor for the next cycle. Further, the external unit further includes a four-way valve, a condenser, a draught fan, and a throttling element.

In any embodiment described above, preferably, the water heater further includes: a control configuration, connected to both the external unit and the heat storage device; and at least two throttle components, located at the second pipe and arranged corresponding to said at least two heat storage devices, respectively.

In this embodiment, the water heater further includes the control configuration and the throttle component. The control configuration is connected to both the external unit and the heat storage device for controlling the entire system, and the throttle component is arranged corresponding to the heat storage device. Further, the heat storage device includes a liquid inlet and a liquid outlet both connected to the external unit. The liquid inlet is connected to the first pipe; the liquid outlet is connected to the second pipe; the throttle component is arranged at the second pipe and located close to the liquid outlet for controlling the amount of the refrigerant outflowing from the heat storage device. Further, the throttle component and the heat storage device are arranged in one-to-one correspondence.

In any embodiment described above, preferably, the water outlet pipe includes a water outlet, and the number of the water outlets are at least two.

In this embodiment, the water outlet pipe includes a water outlet, and the number of the water outlets is at least two, so that users can use water in different spaces.

In specific, the water heater is composed of two or more heat storage devices each containing the phase-change material and one external unit. The external unit is composed of the compressor, the evaporator, the condenser and the throttling element. During operation, the low-grade heat energy is absorbed for storing heat in the heat storage device. The phase-change material with a high enthalpy value is evenly distributed in the heat storage device, thereby greatly minimizing the overall volume. The heat exchanger is arranged in the phase-change material, and the heat exchanger is provided inside with the heat-storage flow path and the heat-exchange water path in the intersected manner. The water outlet pipes of individual heat storage devices are connected and communicated with each other, and each water outlet pipe is provided with the one-way solenoid valve, so that the direction of the water flow can be controlled by open and close of the solenoid valve. At the same time, the temperature in the heat storage device is detected in real-time, so that one heat storage device, after depletion of heat, will be immediately heated and provided with heat transferring from other heat storage devices, thus meeting the user's demand on large consumption of hot water.

According to the second aspect of the present disclosure, there is further provided in embodiments a control method for a water heater, for use in a water heater as described in any embodiment in the first aspect. The control method includes: acquiring respective first temperatures in at least two heat storage devices in real-time; and controlling respective valves corresponding to said at least two heat storage devices to open or close according to the respective first temperatures.

According to the second aspect of the present disclosure, the control method for a water heater is for use in a water heater. The water heater system will detect respective first temperatures in at least two heat storage devices in real-time,; and the valve corresponding to the heat storage device is controlled to open or close according to the temperature in the heat storage device, thereby controlling switch-on or switch-off of the water outlet pipe, and thus achieving heat transfer from other heat storage device at a higher temperature by connected water inlet pipes and connected water outlet pipes. In specific, during user's water consumption, when it is detected that the first temperature of one heat storage device is low, accordingly, the temperature of the phase-change material in the heat storage device is low, then the water outflowing from this heat storage device is also at a low temperature, which will not meet the user's demand on hot water consumption. At this time, the water outlet pipe of this heat storage device at the lower temperature is switched off, and the water outlet pipe of other heat storage devices at a higher temperature is switched on. As the water outlet pipes are connected and the water inlet pipes are also connected for several heat storage devices, the hot water at a higher temperature outflowing from the heat storage device at a higher temperature will be able to outflow from the water outlet pipe at the position where hot water is being consumed, thereby achieving the purpose of transferring heat from other heat storage devices at a higher temperature, thus meeting the user's demand on large consumption of hot water.

In any embodiment described above, preferably, the step of controlling respective valves corresponding to said at least two heat storage devices to open or close according to the respective first temperatures specifically includes: acquiring a temperature difference value between the respective first temperatures corresponding to any heat storage devices within a preset time period; comparing the temperature difference value with a first difference value; and controlling the respective valves corresponding to said at least two heat storage devices to open or close when the temperature difference value is greater than or equal to the first difference value.

In this embodiment, acquiring a temperature difference value between the respective first temperatures corresponding to any heat storage devices within a preset time period is to acquire the temperature difference value between the respective first temperatures of the heat storage devices. When the temperature difference value is greater than or equal to the first difference value, it indicates that the temperature of the heat storage device changes greatly within the preset time period, meaning that the water outlet pipe corresponding to this heat storage device is discharging water, where a water flow signal presents. When this water outlet pipe is discharging water, the respective valves corresponding to said at least two heat storage devices are controlled to open or close, so as to transfer heat from other heat storage devices at a higher temperature.

In specific, within 2 second, if a change value of the first temperature (i.e., the temperature difference value) is greater than or equal to 5°C, it is considered that the water outlet pipe corresponding to this heat storage device is discharging water. During water consumption, the respective valves corresponding to said at least two heat storage devices are controlled to open or close, so as to transfer heat from other heat storage devices at a higher temperature.

In any embodiment described above, preferably, the step of controlling the respective valves corresponding to said at least two heat storage devices to open or close specifically includes: comparing the first temperature of the heat storage device in which the temperature difference value is greater than or equal to the first difference value with a first temperature threshold; controlling the valve corresponding to the heat storage device in which the first temperature is lower than or equal to the first temperature threshold to close, when the first temperature is lower than or equal to the first temperature threshold; comparing the first temperature in other heat storage devices with a second temperature threshold; and controlling the valve corresponding to the heat storage device in which the first temperature is greater than or equal to the second temperature threshold to open, when the first temperature in other heat storage devices is greater than or equal to the second temperature threshold, wherein the second temperature threshold is greater than the first temperature threshold.

In this embodiment, when controlling respective valves corresponding to at least two heat storage devices to open or close according to the respective first temperatures, the first temperature of the heat storage device in which the first temperature decreases rapidly is compared with the first temperature threshold. If the first temperature in this heat storage device corresponding thereto is lower than or equal to the first temperature threshold, that is the temperature of this heat storage device which is discharging water is low, the water outlet pipe of the heat storage device which is discharging water is controlled to switch off by close of the valve, thereby preventing water at a low temperature from discharging from the water outlet pipe that the user is in use. At the same time, the first temperature in other heat storage devices is compared with the second temperature threshold. When the first temperature in any one heat storage device among other heat storage devices is greater than or equal to the second temperature threshold, the valve at the water outlet pipe corresponding to the heat storage device in which the first temperature is greater than or equal to the second temperature threshold is controlled to open, so that cold water can flow to the heat storage device in which the first temperature is greater than the second temperature threshold for heat exchange in the heat storage device, and become hot water at a higher temperature before outflow from the water outlet pipe that the user is in use, thereby achieving heat transfer from other heat storage device at a higher temperature.

In specific, the first temperature threshold and the second threshold are both set in advance, for example 60°C, 70°C, or the like. The second temperature threshold is greater than the first temperature threshold.

In any embodiment described above, preferably, the control method further includes detecting a water flow signal of the water outlet pipe in real-time, prior to the step of acquiring respective first temperatures in at least two heat storage devices in real-time.

In this embodiment, the water heater system will detect respective water outflow signals of the water outlet pipes in real-time. When it is detected that the water outlet pipe is discharging water, the respective first temperatures in said at least two heat storage devices are acquired in real-time, the valve corresponding to the heat storage device is controlled to open or close according to the temperature in the heat storage device, so as to control the water inlet pipe and the water outlet pipe to switch-on or switch-off, thereby achieving heat transfer from other heat storage device at a higher temperature by connected water inlet pipes and connected water outlet pipes.

In any embodiment described above, preferably, the step of controlling respective valves corresponding to said at least two heat storage devices to open or close according to the respective first temperatures specifically includes: comparing the first temperature in the heat storage device corresponding to the water flow signal with the first temperature threshold; controlling the valve corresponding to the heat storage device which corresponds to the water flow signal to close, when the first temperature in the heat storage device corresponding to the water flow signal is lower than or equal to the first temperature threshold; comparing the first temperature in other heat storage devices with the second temperature threshold; and controlling the valve corresponding to the heat storage device in which the first temperature is greater than or equal to the second temperature threshold to open, when the first temperature in other heat storage devices is greater than or equal to the second temperature threshold, wherein the second temperature threshold is greater than the first temperature threshold.

In this embodiment, when controlling respective valves corresponding to said at least two heat storage devices are controlled to open or close according to respective first temperatures, the first temperature in the heat storage device corresponding to the water flow signal is compared with the first temperature threshold, if the first temperature in the heat storage device corresponding to the water flow signal is lower than or equal to the first temperature threshold, that is the temperature in the heat storage device, the water outlet pipe of which is discharging water, is low, the water inlet pipe and the water outlet pipe of this heat storage device which is discharging water are switched off by close of the valve, so as to prevent water at a low temperature from outflowing from the water outlet pipe which is in use by the user. At the same time, the first temperature in other heat storage devices is compared with the second temperature threshold, when the first temperature in any one heat storage device among other heat storage devices is greater than or equal to the second temperature threshold, the valve at the water inlet pipe and the water outlet pipe corresponding to the heat storage device in which the first temperature is greater than or equal to the second temperature threshold is controlled to open, so as to enable cold water to flow to the heat storage device in which the first temperature is greater than the second temperature threshold, for heat exchange in this heat storage device, and become hot water at a higher temperature before outflowing from the water outlet pipe which is in use by the user, thus achieving heat transfer of hot water from other heat storage device at a higher temperature.

In any embodiment described above, preferably, the heat storage device includes a liquid outlet and a throttle component arranged at the liquid outlet, wherein the control method further includes: comparing the respective first temperatures in said at least two heat storage devices with a third temperature threshold; controlling the throttle component corresponding to the heat storage device in which the first temperature is lower than or equal to the third temperature threshold to open by a first opening degree, when the first temperature in any heat storage device is lower than or equal to the third temperature threshold; comparing the first temperature in the heat storage device, the throttle component of which is opened by the first opening degree, with the second temperature threshold; and controlling the throttle component corresponding to the heat storage device in which the first temperature is greater than or equal to the second temperature threshold to close to a second opening degree, when the first temperature in the heat storage device, the throttle component of which is opened by the first opening degree, is greater than or equal to the second temperature threshold, wherein the first temperature threshold is lower than or equal to the third temperature threshold.

In this embodiment, when the first temperature in the heat storage device is low, at the same time of heat transfer from other heat storage device at a higher temperature, the heat storage device at the low temperature is controlled to start heating. In specific, when it is detected that the temperature in the heat storage tank decreases, the respective first temperatures in the heat storage devices are detected. When it is detected that the first temperature in any one heat storage device is lower than the third temperature threshold, the throttle component corresponding to the heat storage device in which the first temperature is lower than the third temperature threshold is controlled to open at the first opening degree. At the same time, the external unit is started in operation, to provide heating for this heat storage device. When this heat storage device is heated such that the first temperature is greater than or equal to the second temperature threshold, the throttle component corresponding to this heat storage device is controlled to open at the second opening degree, and heating for this heat storage device is stopped. The heating is completed for user's future use next time.

In specific, during user's water consumption, the valve at the water outlet pipe for each heat storage device will be kept normally in the switching-on state, and the system will detect the respective temperature in respective heat storage tanks in real-time. Taking the heat storage device A as an example, when it is detected that the temperature in the tank corresponding to the heat storage device A decreases, at this time the system detects the first temperature T1 in the heat storage device A and the respective first temperatures T2, T3, ... of other heat storage devices, if any temperature is lower than the third temperature threshold, the throttle component corresponding to this heat storage device is controlled to open to the first opening degree. The external unit is started to provide heating for the heat storage device in which the first temperature is lower than the third temperature threshold. When the first temperature of the phase-change material in the heat storage device A is lower than the first temperature threshold, the valve at the water outlet pipe corresponding to the heat storage device A is controlled to close. The system detects the temperature of the phase-change material in other heat storage devices, i.e., detects the first temperature in other heat storage devices, when the first temperature in other heat storage devices is higher than the second temperature threshold, the valve at the water outlet pipe corresponding to this heat storage device is controlled to open, such that heat in other heat storage devices in which the first temperature of the phase-change material is greater than the second temperature threshold can be transferred. As the first temperature threshold is lower than the third temperature threshold, at this time the first temperature in the heat storage device A is lower than the third temperature threshold, the external unit provides heating for the heat storage device A. When the first temperature in the heat storage device A is greater than the second temperature threshold, heating for the heat storage device is stopped.

According to the third aspect, the present disclosure provides in embodiments a computer readable storage medium having stored therein a computer program that, when executed by a processor, performs steps of the control method as described in any of the above embodiments, thus having all technical effects of the control method for a water heater, which are not repeated here.

The additional aspects and advantages of the present disclosure will become obvious from the following description, or be understood through the practice of this application.

### BRIEF DESCRIPTION OF THE DRAWINGS

The above and/or additional aspects and advantages of the present disclosure will become obvious and understandable with the following description for embodiments by combining the accompanying drawings.
Figure 1 is a structural diagram showing a water heater according to an embodiment of the present disclosure;
Figure 2 is a structural diagram showing a heat storage device according to an embodiment of the present disclosure;
Figure 3 is another structural diagram showing a water heater according to an embodiment of the present disclosure;
Figure 4 is another structural diagram showing a heat storage device according to an embodiment of the present disclosure;
Figure 5 is a flow chart showing a control method for a water heater according to an embodiment of the present disclosure;
Figure 6 is another flow chart showing a control method for a water heater according to an embodiment of the present disclosure;
Figure 7 is still another flow chart showing a control method for a water heater according to an embodiment of the present disclosure;
Figure 8 is a flow chart showing a control method for a water heater according to a specific embodiment of the present disclosure;
Figure 9 is yet another flow chart showing a control method for a water heater according to an embodiment of the present disclosure.

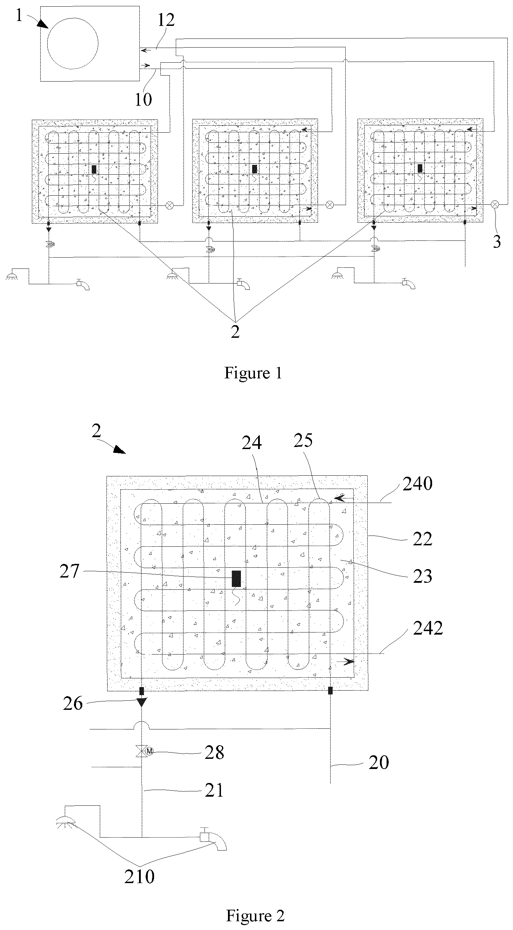

The correspondence between the reference signs and the names of parts in Figures 1 to 4 is defined as below.

1: external unit; 10: first pipe; 12: second pipe; 2: heat storage device; 20: water inlet pipe; 21: water outlet pipe; 210: water outlet; 22: outer shell; 23: phase-change material; 24: heat-storage flow path; 240: liquid inlet; 242: liquid outlet; 25: heat-exchange water path; 27: temperature detecting configuration; 28: valve; 3: throttle component.

### DETAILED DESCRIPTION

In order to understand the above objectives, features and advantages of the present disclosure more clearly, the present disclosure will be further described in detail below in conjunction with the accompanying drawings and specific embodiments. It should be noted that embodiments and features in embodiments of the present disclosure can be combined with each other without conflict.

In the following description, many specific details are set forth in order to fully understand the present disclosure. However, the present disclosure can also be implemented in other ways different from those described herein. Therefore, the protection scope of the present disclosure is not limited by the specific embodiments disclosed below.

A water heater, a control method for a water heater and a computer readable storage medium are described below according to some embodiments of the present disclosure with reference to Figure 1 to Figure 9.

According to one embodiment in the first aspect of the present disclosure, there is provided a water heater, including: an external unit 1, in which a refrigerant is provided; a heat storage device 2 connected to the external unit 1. The external unit 1 is capable of compressing the refrigerant and causing the refrigerant to flow to the heat storage device 2 for storing heat in the heat storage device 2. Each heat storage device 2 is provided with a water inlet pipe 20 and a water outlet pipe 21. The number of the heat storage devices 2 is at least two which are connected in parallel.

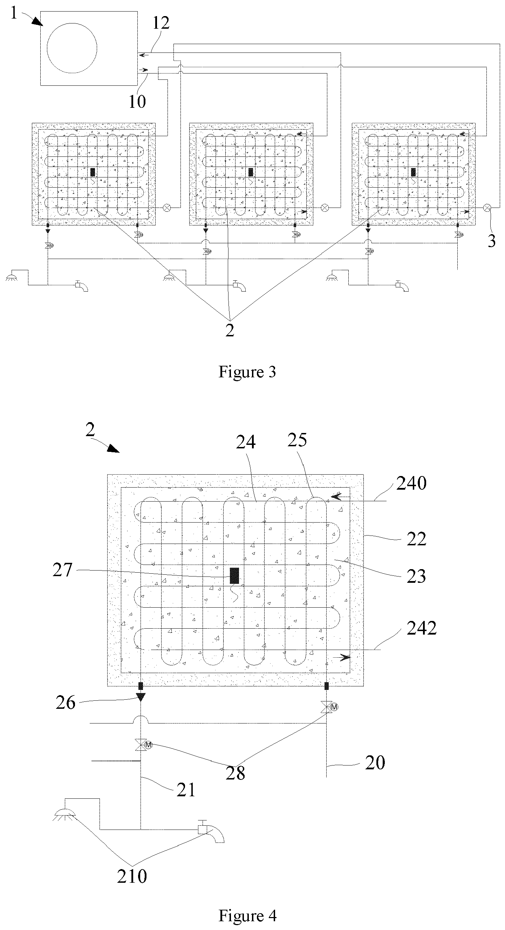

As shown in Figure 1 and Figure 3, the present disclosure provides in embodiments a water heater, including the external unit 1 and the heat storage device 2. The external unit 1 is configured to provide heat to the heat storage device 2, to store the heat in the heat storage device 2. Each heat storage device 2 includes the water inlet pipe 20 and the water outlet pipe 21. The water flow enters from the water inlet pipe 20, passes through the heat storage device 2 for heat exchange with the heat storage device 2, and outflows from the water outlet pipe 21 as hot water. In the whole process, the heat storage device 2 does not need to store water, which can significantly reduce the volume of the heat storage device 2. When hot water is needed, the cold water entering from the water inlet pipe 20 directly passes through the heat storage device 2 and then outflows from the water outlet pipe 21, thus achieving a function of heating running water, meeting the user's demand on rapid consumption of hot water, and ensuring healthy water consumption. In addition, the number of the heat storage devices 2 is at least two, which greatly improve the water supply for the user. Each heat storage device 2 is provided with the water inlet pipe 20 and the water outlet pipe 21. The at least two heat storage device 2 may be installed separately in different spaces for users to use in different spaces. The at least two heat storage device 2 are connected in parallel, so that one heat storage device 2, after depletion of heat, will be immediately heated and provided with heat transferring from other heat storage devices 2, thus meeting the user's demand on large consumption of hot water. Besides, the external unit 1 and the heat storage 2 may be installed separately, thereby avoiding noise from occurring at the internal side for heat storage and water consumption, thus improving comfortableness and achieving installation in either exposing or hidden way, thus saving spaces for users.

In the above embodiment, preferably, respective water inlet pipes 20 corresponding to any two heat storage devices 2 among the at least two storage devices 2 are connected, and respective water outlet pipe 21 corresponding to any two heat storage devices 2 among the at least two storage devices 2 are connected.

As shown in Figure 1, in this embodiment, respective water inlet pipes 20 corresponding to any two heat storage devices 2 among the at least two storage devices 2 are connected; respective water outlet pipes 21 corresponding to any two heat storage devices 2 among the at least two storage devices 2 are connected; and any one of the water inlet pipes 20 is connected to a tap water pipe. During water consumption, when a temperature in the heat storage device 2, the water outlet pipe 21 of which is discharging water, is low, the water outlet pipe 20 of this heat storage device 2 is provided with hot water transferring from other heat storage devices 2, at the same time this heat storage device 2 having the low temperature is heated, thereby meeting the user's demand on large consumption of hot water.

In any embodiment described above, preferably, the heat storage device 2 includes: a valve 28, arranged at the water inlet pipe 20 and/or the water outlet pipe 21. The position where the respective water outlet pipes 21 corresponding to any two heat storage devices 2 among said at least two storage devices 2 are connected is located in front of the valve 28 at the water outlet pipe 21 along a direction of water outflow; and/ or the position where respective water inlet pipes 20 corresponding to any two heat storage devices 2 among said at least two heat storage devices 2 are connected is located after the valve at the water inlet pipe 20 long a direction of water inflow.

As shown in Figure 2, in this embodiment, the water outlet pipe 21 is provided with a valve 28, which is configured to control the water outlet pipe 21 to switch-on or switch-off. Further, the valve 28 is normally in a switching-on state. The position where the respective water outlet pipes 21 corresponding to any two heat storage devices 2 among said at least two storage devices 2 are connected is located in front of the valve 28 along the direction of water outflow. In other words, the water flow first passes through the valve 28 and then passes through the position where the respective water outlet pipes 21 are connected, thus enabling the valve 28 to be able to control the water outlet pipe 21 of the heat storage device 2 corresponding to this valve 28. Further, the water inlet pipe 20 is also provided with a valve 28. The position where the respective water inlet pipes 20 are connected is located after the valve 28 at the water inlet pipe 20. In other words, the water flow first passes through the position where the respective water inlet pipes 20 are connected and then passes through the valve 28 at the water inlet pipe 20.

Further, as shown in Figure 4, in this embodiment, the water inlet pipe 20 and the water outlet pipe 21 each are provided with the valve 28 which is configured to control the water outlet pipe 21 to switch-on or switch-off; the position where the respective water inlet pipes 20 corresponding to any two heat storage devices 2 among said at least two heat storage devices 2 are connected is located after the valve 28 thereon along the direction of water inflow.

In any embodiment described above, preferably, the heat storage 2 further includes: an outer shell 22, within which is filled with a phase-change material 23; and a heat exchanger, arranged inside the outer shell 22 and provided inside with a heat-storage flow path 24 and a heat-exchange water path 25 in an intersected manner. The phase-change material 23 is filled between the heat-storage flow path 24 and heat-exchange water path 25. The heat-exchange water path 25 connects the water inlet pipe 20 and the water outlet pipe 21. The heat-storage flow path 24 is connected to the external unit 1 via a refrigerant pipe, and the refrigerant is capable of flowing from the external unit 1 to the heat-storage flow path 24 via the refrigerant pipe.

As shown in Figure 2, in this embodiment, the heat storage device further includes the outer shell 22 and the heat exchanger arranged inside the outer shell 22. The heat exchanger is provided inside with the heat-storage flow path 24 and the heat-exchange water path 25 in the intersected manner. The phase-change material 23 is filled between the heat-storage flow path 24 and heat-exchange water path 25, to achieve heat exchange between fluid and water. The heat-storage flow path 24 is connected to the external unit 1. The fluid passes through the heat-storage flow path 24 for heat exchange with the phase-change material 23, so as to store heat in the phase-change material 23. The heat-exchange water path 25 connects the water inlet pipe 22 and the water outlet pipe 21, so that water flow enters the heat-exchange water path 25 from the water inlet pipe 22, becomes hot water after heat exchange with the phase-change material 23, and outflows from the water outlet pipe 21, thereby meeting the user's demand on hot water consumption.

In any embodiment described above, preferably, the heat storage device 2 further includes: a temperature detecting configuration 27, arranged inside the outer shell 22 and configured to detect a temperature of the phase-change material 23.

As shown in Figure 2, in this embodiment, the heat storage device 2 further includes the temperature detecting configuration 27. The temperature detecting configuration 27 is arranged inside the outer shell 22 and configured to detect the temperature of the phase-change material 23, so as to judge the remaining heat inside the heat storage device 2, and further judge whether action of heat storage is completed or whether the phase-change material 23 needs to be heated according to the temperature in the phase-change material 23.

In any embodiment described above, preferably, the valve 28 is a one-way solenoid valve.

In this embodiment, the valve 28 is the one-way solenoid valve, thereby controlling the water outlet pipe 21 to switch-on or switch-off in one way.

In any embodiment described above, preferably, the phase-change material 23 has a phase-change temperature greater than or equal to 45 °C and lower than or equal to 80 °C.

In this embodiment, the phase-change material 23 has the phase-change temperature greater than or equal to 45 °C and lower than or equal to 80 °C. Compared with the water storage- and heat pump-based water heater, the water heater provided in embodiments of the present disclosure is of a reduce volume by more than 45% under the premise of supplying the same volume of hot water.

In any embodiment described above, preferably, the external unit 1 further includes: a shell body, connected with the refrigerant pipe which includes a first pipe 10 and a second pipe 12, the first pipe 10 and the second pipe 12 each connecting the shell body and the heat-storage flow path 24; a compressor, arranged inside the shell body and connected to the first pipe 10; and an evaporator, arranged inside the shell body and connected to both the compressor and the second pipe 12, wherein the compressor is capable of compressing the refrigerant and causing the refrigerant to flow from the compressor to the heat storage device 2 via the refrigerant pipe, for storing heat in the heat storage device 2.

As shown in Figure 1, in this embodiment, the external unit 1 includes the shell body; and the compressor and the evaporator both arranged inside the shell body. In specific, the compressor compresses the refrigerant, and thus the refrigerant is compressed in the compressor into a high-temperature and high-pressure stage before entering the heat storage device 2, in which heat exchange occurs between the refrigerant and the phase-change material 23, so as to store heat in the heat storage device 2. After the heat exchange, the refrigerant flows from the heat storage device 2 to the evaporator via the second pipe 12, and then flows back to the compressor for the next cycle. Further, the external unit 1 further includes a four-way valve, a condenser, a draught fan, and a throttling element. In specific, the refrigerant flows in the direction indicated as the arrow shown in Figure 1.

In any embodiment described above, preferably, the water heater further includes a control configuration, connected to both the external unit 1 and the heat storage device 2; at least two throttle components 3, located at the second pipe 12 and arranged corresponding to said at least two heat storage devices 2, respectively.

In this embodiment, the water heater further includes the control configuration and the throttle component 3. The control configuration is connected to both the external unit 1 and the heat storage device 2 for controlling the entire system, and the throttle component 3 is arranged corresponding to the heat storage device 2. Further, the heat storage device 2 includes a liquid inlet 240 and a liquid outlet 242 both connected to the external unit 1. The liquid inlet 240 is connected to the first pipe 10; the liquid outlet 242 is connected to the second pipe 12; the throttle component 3 is arranged at the second pipe 12 and located close to the liquid outlet 242 for controlling the amount of the refrigerant outflowing from the heat storage device 2. Further, the throttle component 3 and the heat storage device 2 are arranged in one-to-one correspondence.

In any embodiment described above, preferably, the water outlet pipe 21 includes a water outlet 210, and the number of the water outlets 210 is at least two.

As shown in Figure 2, in this embodiment, the water outlet pipe 21 includes the water outlet 210, and the number of the water outlets 210 is at least two, so that users can use water in different spaces.

In specific, the water heater is composed of two or more heat storage devices 2 each containing the phase-change material 23 and one external unit 1. The external unit 1 is composed of the compressor, the evaporator, the condenser and the throttling element. During operation, the low-grade heat energy is absorbed for storing heat in the heat storage device 2. The phase-change material 23 with a high enthalpy value is evenly distributed in the heat storage device 2, thereby greatly minimizing the overall volume. The heat exchanger is arranged in the phase-change material 23, and the heat exchanger is provided inside with the heat-storage flow path 24 and the heat-exchange water path 25 in the intersected manner. The water inlet pipe 20 and the water outlet pipe 21 of individual heat storage devices 2 are connected and communicated with each other. The water inlet pipe 20 and the water outlet pipe 21 each are provided with the one-way solenoid valve, so as to control the direction of the water flow by open and close of the solenoid valve. At the same time, the temperature in the heat storage device is detected in real-time, so that one heat storage device 2, after depletion of heat, will be immediately heated and provided with heat transferring from other heat storage devices 2, thus meeting the user's demand on large consumption of hot water.

According to the second aspect of the present disclosure, there is provided a control method for a water heater.

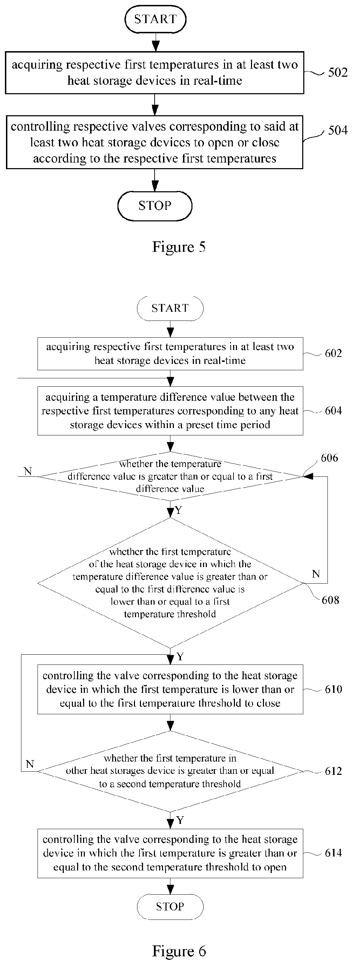

Figure 5 is a flow chart showing a control method for a water heater according to an embodiment of the present disclosure. As shown in Figure 5, the control method includes steps 502 and 504.

At the step 502, respective first temperatures of at least two heat storage devices are acquired in real-time.

At the step 504, respective valves corresponding to the at least heat storage devices are controlled to open or close according to the respective first temperatures.

According to the second aspect of the present disclosure, the control method for a water heater is for use in a water heater. The water heater system will detect respective temperatures in tanks in real-time, so that when it is detected that the temperature in the heat storage tank decreases rapidly, respective first temperatures of at least two heat storage devices are acquired in real-time; and the valve corresponding to the heat storage device is controlled to open or close according to the temperature in the heat storage device, thereby controlling switch-on or switch-off of the water outlet pipe, and thus achieving heat transfer from other heat storage device at a higher temperature by connected water outlet pipes. In specific, during user's water consumption, when it is detected that the first temperature of one heat storage device is low, accordingly, the temperature of the phase-change material in the heat storage device is low, then the water outflowing from this heat storage device is also at a low temperature, which will not meet the user's demand on hot water consumption. At this time, the water outlet pipe of this heat storage device at the lower temperature is switched-off, and the water outlet pipe of other heat storage devices at a higher temperature is switched on. As the water outlet pipes are connected and the water inlet pipes are also connected for several heat storage devices, the hot water at a higher temperature outflowing from the heat storage device at a higher temperature will be able to outflow from the water outlet pipe at the position where hot water is being consumed, thereby achieving the purpose of transferring heat from other heat storage devices at a higher temperature, thus meeting the user's demand on large consumption of hot water.

Figure 6 is another flow chart showing a control method for a water heater according to an embodiment of the present disclosure. As shown in Figure 6, the control method includes steps 602 to 614.

At the step 602, respective first temperatures in at least two heat storage devices are acquired in real-time.

At the step 604, a temperature difference value between the respective first temperatures corresponding to any heat storage devices within a preset time period is acquired.

At the step 606, it is judged whether the temperature difference value is greater than or equal to a first difference value; if yes, jumping to the step 608; if no, returning to the step 604.

At the step 608, it is judged whether the first temperature of the heat storage device in which the temperature difference value is greater than or equal to the first difference value is lower than or equal to a first temperature threshold; if yes, jumping to the step 610; if no, returning to the step 606.

At the step 610, the valve corresponding to the heat storage device in which the first temperature is lower than or equal to the first temperature threshold is controlled to close.

At the step 612, it is judged whether the first temperature in other heat storages devices is greater than or equal to a second temperature threshold; if yes, jumping to the step 614; if no, returning to the step 610.

At the step 614, the valve corresponding to the heat storage device in which the first temperature is greater than or equal to the second temperature threshold is controlled to open.

In this embodiment, when controlling respective valves corresponding to at least two heat storage devices to open or close according to the respective first temperatures, the temperature difference value between the respective first temperatures corresponding to any heat storage devices within a preset time period is acquired. If the temperature difference value is greater than the first difference value, it indicates that water is being consumed, that is a water flow signal presents. At this moment, the first temperature of the heat storage device in which the temperature in the heat storage device decreases rapidly is compared with the first temperature threshold, if the first temperature of the heat storage device in which the temperature decreases rapidly is lower than or equal to the first temperature threshold, that is the temperature in the heat storage device, the water outlet pipe of which is discharging water, is low, the water outlet pipe of this heat storage device is switched off by close of the valve, so as to prevent water at the low temperature from outflowing from the water outlet pipe which is in use by the user. At the same time, the first temperature in other heat storage devices is compared with the second temperature threshold; and when the first temperature of any one heat storage device among other heat storage devices is greater than or equal to the second temperature threshold, the valve at the water inlet pipe and the water outlet pipe corresponding to the heat storage device in which the first temperature is greater than or equal to the second temperature threshold is controlled to open, so as to enable cold water to flow to the heat storage device in which the first temperature is greater than the second temperature threshold, for heat exchange in this heat storage device, and become hot water at a higher temperature before outflowing from the water outlet pipe which is in use by the user, thus achieving heat from other heat storage device at a higher temperature.

In specific, the first temperature threshold and the second threshold are both set in advance, for example 60°C, 70°C , or the like. The second temperature threshold is greater than the first temperature threshold.

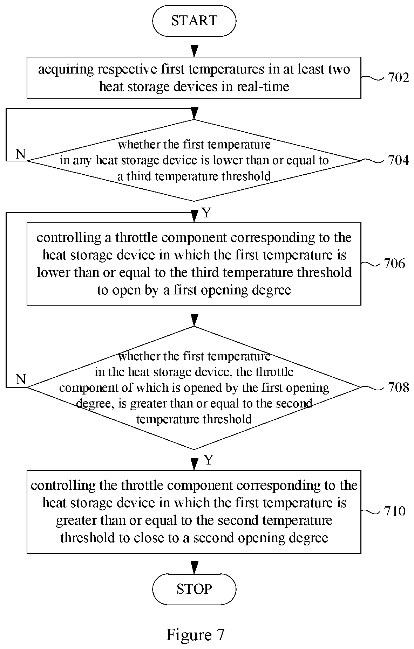

Figure 7 is still another flow chart showing a control method for a water heater according to an embodiment of the present disclosure. As shown in Figure 7, the control method includes steps 702 to 710.

At the step 702, respective first temperatures in at least two heat storage devices are acquired in real-time.

At the step 704, it is judged that whether the first temperature in any heat storage device is lower than or equal to a third temperature threshold; if yes, jumping to the step 706; if no, returning to the step 702.

At the step 706, a throttle component corresponding to the heat storage device in which the first temperature is lower than or equal to the third temperature threshold is controlled to open by a first opening degree.

At the step 708, it is judged whether the first temperature in the heat storage device, the throttle component of which is opened by the first opening degree, is greater than or equal to the second temperature threshold; if yes, jumping to the step 710; if no, returning to the step 706.

At the step 710, the throttle component corresponding to the heat storage device in which the first temperature is greater than or equal to the second temperature threshold is controlled to close to a second opening degree.

In this embodiment, when the first temperature in the heat storage device is low, at the same time of heat transfer from other heat storage device at a higher temperature, the heat storage device at the low temperature is controlled to start heating. In specific, when it is detected that a water flow signal presents, the respective first temperatures in the heat storage devices are detected. When it is detected that the first temperature in any one heat storage device is lower than the third temperature threshold, the throttle component corresponding to the heat storage device in which the first temperature is lower than the third temperature threshold is controlled to open at the first opening degree, so as to enable the external unit to provide heating. When the heat storage device is heated such that the first temperature is greater than or equal to the second temperature threshold, the throttle component corresponding to this heat storage device is controlled to open at the second opening degree, and heating for this heat storage device is stopped. The heating is completed for user's future use next time.

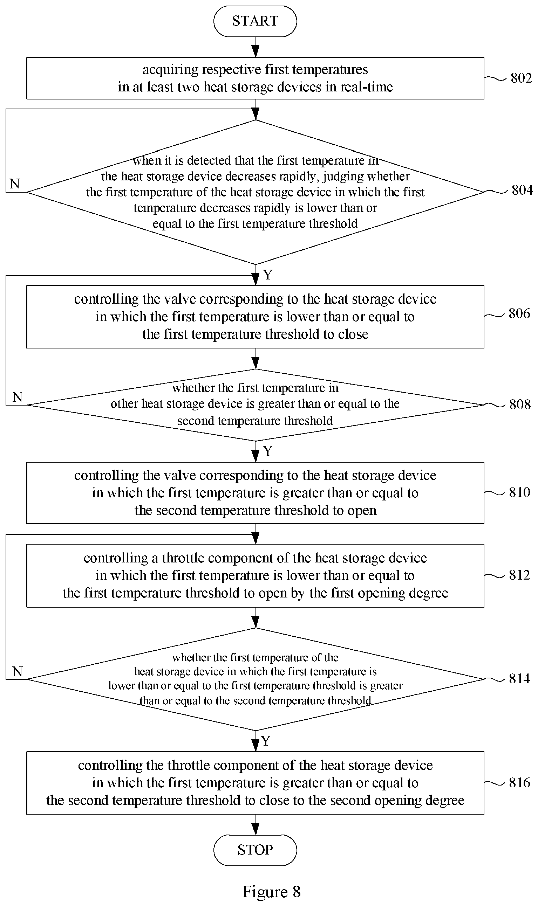

Figure 8 is a flow chart showing a control method for a water heater according to a specific embodiment of the present disclosure. As shown in Figure 8, the control method includes steps 802 to 816.

At the step 802, respective first temperatures in at least two heat storage devices are acquired in real-time.

At the step 804, when it is detected that the first temperature in the heat storage device decreases rapidly, it is judged whether the first temperature of the heat storage device in which the first temperature in the heat storage device decreases rapidly is lower than or equal to the first temperature threshold; if yes, jumping to the step 806; if no, returning to the step 802.

At the step 806, the valve corresponding to the heat storage device in which the first temperature is lower than or equal to the first temperature threshold is controlled to close.

At the step 808, it is judged whether the first temperature in other heat storage devices is greater than or equal to the second temperature threshold; if yes, jumping to the step 810, if no, returning to the step 806.

At the step 810, the valve corresponding to the heat storage in which the first temperature is greater than or equal to the second temperature threshold is controlled to open.

At the step 812, the throttle component of the heat storage device in which the first temperature is lower than or equal to the first temperature threshold is controlled to open by the first opening degree.

At the step 814, it is judged whether the first temperature of the heat storage device in which the first temperature is lower than or equal to the first temperature threshold is greater than or equal to the second temperature threshold; if yes, jumping to the step 816, if no, returning to the step 812.

At the step 816, the throttle component of the heat storage device in which the first temperature is greater than or equal to the second temperature threshold is controlled to the second opening degree.

In this embodiment, in specific, during user's water consumption, the valve at the water outlet pipe for each heat storage device will be kept normally in the switching-on state, and the system will detect the respective temperature in respective heat storage tanks in real-time. Taking the heat storage device A as an example, when it is detected that the temperature in the tank corresponding to the heat storage device A decreases rapidly, at this time the system detects the first temperature T1 in the heat storage device A and the respective first temperatures T2, T3, ... of other heat storage devices, if any temperature is lower than the third temperature threshold, the throttle component corresponding to this heat storage device is controlled to open to the first opening degree. The first opening degree may be any opening degree that ensures the refrigerant to flow rapidly for storing heat in the phase-change material, so that the external unit is started to provide heating for the heat storage device in which the first temperature is lower than the third temperature threshold. When the first temperature of the phase-change material in the heat storage device A is lower than the first temperature threshold, the valve at the water inlet pipe and the water outlet pipe corresponding to the heat storage device A is controlled to close. The system detects the temperature of the phase-change material in other heat storage devices, i.e., detects the first temperature in other heat storage devices, when the first temperature in other heat storage devices is higher than the second temperature threshold, the valve at the water inlet pipe corresponding to this heat storage device is controlled to open, such that heat in other heat storage devices in which the first temperature of the phase-change material is greater than the second temperature threshold can be transferred. As the first temperature threshold is lower than the third temperature threshold, at this time the first temperature in the heat storage device A is lower than the third temperature threshold, the external unit provides heating for the heat storage device A. When the first temperature in the heat storage device A is greater than the second temperature threshold, heating for the heat storage device is stopped.

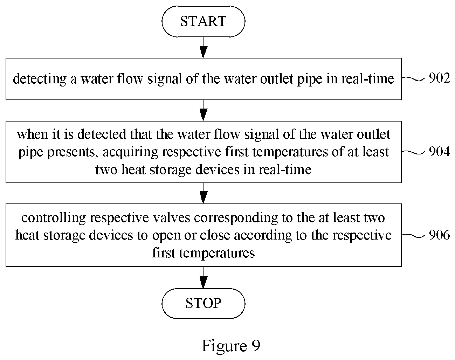

Figure 9 is a flow chart showing a control method for a water heater according to an embodiment of the present disclosure. As shown in Figure 9, the control method includes steps 902 to 906.

At the step 902, the water flow signal of the water outlet pipe is detected in real-time.

At the step 904, when it is detected that the water flow signal of the water outlet pipe presents, respective first temperatures of at least two heat storage devices are acquired in real-time.

At the step 906, respective valves corresponding to said at least two heat storage devices is controlled to open or close according to the respective first temperature.

In this embodiment, the water heater system will detect respective water outflow signals of the water outlet pipes in real-time. When it is detected that the water outlet pipe is discharging water, the respective first temperatures in said at least two heat storage devices are acquired in real-time, the valve corresponding to the heat storage device is controlled to open or close according to the temperature in the heat storage device, so as to control the water inlet pipe and the water outlet pipe to switch-on or switch-off, thereby achieving heat transfer from other heat storage device at a higher temperature by connected water inlet pipes and connected water outlet pipes.

In any embodiment described above, preferably, the step 906 specifically includes: comparing the first temperature in the heat storage device corresponding to the water flow signal with the first temperature threshold; controlling the valve corresponding to the heat storage device which corresponds to the water flow signal to close, when the first temperature in the heat storage device corresponding to the water flow signal is lower than or equal to the first temperature threshold; comparing the first temperature in other heat storage devices with the second temperature threshold; controlling the valve corresponding to the heat storage device in which the first temperature is greater than or equal to the second temperature threshold to open, when the first temperature in other heat storage devices is greater than or equal to the second temperature threshold, wherein the second temperature threshold is greater than the first temperature threshold.

In this embodiment, when controlling respective valves corresponding to said at least two heat storage devices are controlled to open or close according to respective first temperatures, the first temperature in the heat storage device corresponding to the water flow signal is compared with the first temperature threshold, if the first temperature in the heat storage device corresponding to the water flow signal is lower than or equal to the first temperature threshold, that is the temperature in the heat storage device, the water outlet pipe of which is discharging water, is low, the water inlet pipe and the water outlet pipe of this heat storage device which is discharging water are switched off by close of the valve, so as to prevent water at a low temperature from outflowing from the water outlet pipe which is in use by the user. At the same time, the first temperature in other heat storage devices is compared with the second temperature threshold, when the first temperature in any one heat storage device among other heat storage devices is greater than or equal to the second temperature threshold, the valve at the water inlet pipe and the water outlet pipe corresponding to the heat storage device in which the first temperature is greater than or equal to the second temperature threshold is controlled to open, so as to enable cold water to flow to the heat storage device in which the first temperature is greater than the second temperature threshold, for heat exchange in this heat storage device, and become hot water at a higher temperature before outflowing from the water outlet pipe which is in use by the user, thus achieving transfer of hot water from other heat storage device at a higher temperature.

According to the third aspect of the present disclosure, there is provided in embodiments a computer readable storage medium having stored therein a computer program that, when executed by a processor, performs steps of the control method as described in any of the above embodiments, thus having all technical effects of the control method for a water heater, which are not repeated here.

In the present disclosure, the term "a plurality of' means two or more than two, unless specified otherwise. The terms "mounted", "connected", "coupled", "fixed" and the like should be understood broadly, and may be, for example, fixed connections, detachable connections, or integrated connections; may be direct connections or indirect connections via an intervening structure. Those ordinary skilled in the art can understand the particular meaning of these terms in the present application depending on specific situations.

Reference throughout this specification to "an embodiment", "some embodiments", "a specific example" or the like means that a particular feature, structure, material, or characteristic described in connection with the embodiment or example is included in at least one embodiment or example of the present disclosure. Thus, the appearances of the phrases such as "an embodiment", "some embodiments", "a specific example" or the like in various places throughout this specification are not necessarily referring to the same embodiment or example of the present disclosure. Furthermore, the particular features, structures, materials, or characteristics may be combined in any suitable manner in one or more embodiments or examples.

The foregoing descriptions are only preferred embodiments of the present disclosure, and are not intended to limit the present disclosure. For those skilled in the art, the present disclosure can have various modifications and changes. Any modification, equivalent replacement, improvement, or the like made within the spirit and principle of the present disclosure shall be included in the protection scope of the present disclosure.

## Claims

1. A water heater, comprising:
an external unit, in which a refrigerant is provided; and
a heat storage device connected to the external unit, the external unit being capable of compressing the refrigerant and causing the refrigerant to flow to the heat storage device for storing heat in the heat storage device, each heat storage device being provided with a water inlet pipe and a water outlet pipe,
wherein the number of the heat storage devices is at least two which are connected in parall el.

2. The water heater according to claim 1, wherein respective water inlet pipes corresponding to any two heat storage devices among said at least two heat storage devices are connected; and respective water outlet pipes corresponding to any two heat storage devices among said at least two heat storage devices are connected.

3. The water heater according to claim 1 or 2, wherein the heat storage device comprises:
a valve, provided at the water outlet pipe and/or the water inlet pipe,
wherein a position where respective water outlet pipes corresponding to any two heat storage devices among said at least two heat storage devices are connected is located in front of the valve at the water outlet pipe along a direction of water outflow; and/or a position where respective water inlet pipes corresponding to any two heat storage devices among said at least two heat storage devices are connected is located after the valve at the water inlet pipe long a direction of water inflow.

4. The water heater according to claim 3, wherein the heat storage device further comprises:
an outer shell, within which is filled with a phase-change material; and
a heat exchanger, arranged inside the outer shell and provided inside with a heat-storage flow path and a heat-exchange water path in an intersected manner, wherein
the phase-change material is filled between the heat-storage flow path and the heat-exchange water path,
the heat-exchange water path connects the water inlet pipe and the water outlet pipe,
the heat-storage flow path is connected to the external unit via a refrigerant pipe,
the refrigerant is capable of flowing from the external unit to the heat-storage flow path via the refrigerant pipe.

5. The water heater according to claim 4, wherein the heat storage device further comprises:
a water flow detecting configuration, arranged at the water outlet pipe, the valve being located in front of the water flow detecting configuration along a direction of water outflow; and/or
a temperature detecting configuration, arranged inside the outer shell and configured to detect a temperature of the phase-change material.

6. The water heater according to claim 5, wherein
the valve is a one-way solenoid valve; and/or
the phase-change material has a phase-change temperature greater than or equal to 45 °C and lower than or equal to 80 °C;
the water flow detecting configuration is a Hall sensor.

7. The water heater according to any one of claims 4 to 6, wherein the external unit further comprises:
a shell body, connected with the refrigerant pipe which comprises a first pipe and a second pipe, the first pipe and the second pipe each connecting the shell body and the heat-storage flow path;
a compressor, arranged inside the shell body and connected to the first pipe; and
an evaporator, arranged inside the shell body and connected to both the compressor and the second pipe,
wherein the compressor is capable of compressing the refrigerant and causing the refrigerant to flow from the compressor to the heat storage device via the refrigerant pipe, for storing heat in the heat storage device.

8. The water heater according to claim 7, further comprising:
a control configuration, connected to both the external unit and the heat storage device; and
at least two throttle components, located at the second pipe and arranged corresponding to said at least two heat storage devices, respectively.

9. The water heater according to any one of claims 1 to 8, wherein the water outlet pipe comprises a water outlet, and the number of the water outlets are at least two.

10. A control method for a water heater, for use in a water heater according to any one of claims 1 to 9, comprising:
acquiring respective first temperatures in at least two heat storage devices in real-time; and
controlling respective valves corresponding to said at least two heat storage devices to open or close according to the respective first temperatures.

11. The control method for a water heater according to claim 10, wherein the step of controlling respective valves corresponding to said at least two heat storage devices to open or close according to the respective first temperatures specifically comprises:
acquiring a temperature difference value between the respective first temperatures corresponding to any heat storage devices within a preset time period;
comparing the temperature difference value with a first difference value; and
controlling the respective valves corresponding to said at least two heat storage devices to open or close when the temperature difference value is greater than or equal to the first difference value.

12. The control method for a water heater according to claim 11, wherein the step of controlling the respective valves corresponding to said at least two heat storage devices to open or close specifically comprises:
comparing the first temperature of the heat storage device in which the temperature difference value is greater than or equal to the first difference value with a first temperature threshold;
controlling the valve corresponding to the heat storage device in which the first temperature is lower than or equal to the first temperature threshold to close, when the first temperature is lower than or equal to the first temperature threshold;
comparing the first temperature in other heat storage devices with a second temperature threshold; and
controlling the valve corresponding to the heat storage device in which the first temperature is greater than or equal to the second temperature threshold to open, when the first temperature in other heat storage devices is greater than or equal to the second temperature threshold,
wherein the second temperature threshold is greater than the first temperature threshold.

13. The control method for a water heater according to claim 12, further comprising:
detecting a water flow signal of the water outlet pipe in real-time, prior to the step of acquiring respective first temperatures in at least two heat storage devices in real-time.

14. The control method for a water heater according to claim 13, wherein the step of controlling respective valves corresponding to said at least two heat storage devices to open or close according to the respective first temperatures specifically comprises:
comparing the first temperature in the heat storage device corresponding to the water flow signal with the first temperature threshold;
controlling the valve corresponding to the heat storage device which corresponds to the water flow signal to close, when the first temperature in the heat storage device corresponding to the water flow signal is lower than or equal to the first temperature threshold;
comparing the first temperature in other heat storage devices with the second temperature threshold; and
controlling the valve corresponding to the heat storage device in which the first temperature is greater than or equal to the second temperature threshold to open, when the first temperature in other heat storage devices is greater than or equal to the second temperature threshold,
wherein the second temperature threshold is greater than the first temperature threshold.

15. The control method for a water heater according to any one of claims 12 to 14, wherein the heat storage device comprises a liquid outlet and a throttle component arranged at the liquid outlet, wherein the control method further comprises:
comparing the respective first temperatures in said at least two heat storage devices with a third temperature threshold;
controlling the throttle component corresponding to the heat storage device in which the first temperature is lower than or equal to the third temperature threshold to open by a first opening degree, when the first temperature in any heat storage device is lower than or equal to the third temperature threshold;
comparing the first temperature in the heat storage device, the throttle component of which is opened by the first opening degree, with the second temperature threshold; and
controlling the throttle component corresponding to the heat storage device in which the first temperature is greater than or equal to the second temperature threshold to close to a second opening degree, when the first temperature in the heat storage device, the throttle component of which is opened by the first opening degree, is greater than or equal to the second temperature threshold,
wherein the first temperature threshold is lower than or equal to the third temperature threshold.

16. A computer readable storage medium having stored therein a computer program that, when executed by a processor, performs a control method for a water heater according to any one of claims 10 to 15.
